# DEMANDE DE BREVET EUROPEEN

(11) **EP 2 840 299 A1**
(43) Date de publication de la demande: **25.02.2015**
(21) Numéro de dépôt: 14179632.6
(22) Date de dépôt: 04.08.2014
(51) Int. Cl.: F21S 8/10, F21V 9/08

(54) **Dispositif d'éclairage et/ou de signalisation dont la couleur est différente lorsquioeil est allumé ou éteint**

(30) Priorité: 05.08.2013 FR 1357768
(71) Demandeur: VALEO VISION, 93012 Bobigny Cedex (FR)
(72) Inventeur: Albou, Pierre, 75013 PARIS (FR); Godbillon, Vincent, 75011 PARIS (FR)

(57) **Abrégé**

L'invention concerne un Dispositif d'éclairage et/ou de signalisation (1), notamment pour véhicule automobile, comprenant un système optique (2) muni d'une source lumineuse (S) configurée pour émettre un faisceau lumineux dans une couleur initiale (F1), ledit dispositif comprenant en outre une glace (3) disposée de manière à être traversée par ledit faisceau, ladite glace (3) étant colorée de manière à transmettre ledit faisceau dans une couleur résultante (F2).

Selon l'invention ledit dispositif (1) comprend en outre un filtre (4) configuré de sorte à rapprocher la couleur résultante (F2) dudit faisceau de sa couleur initiale (F1).

## Description

La présente invention concerne un dispositif d'éclairage et/ou de signalisation, notamment pour véhicule automobile. Elle est en particulier destinée aux feux de position, clignotant ou feux stop.

Dans ce domaine, il est connu d'utiliser des systèmes lumineux munis d'une source lumineuse, en général une diode électroluminescente, et une glace à travers laquelle se propage un faisceau lumineux issu de la source. La glace sert à la fois de protection pour le système lumineux et d'élément complémentaire de la carrosserie du véhicule pour les aspects aérodynamiques et esthétiques.

Des règles strictes encadrent les choix possibles de couleurs et d'intensités pour les faisceaux lumineux de ces dispositifs. Ainsi, chaque fonction a une couleur spécifique, par exemple l'ambré pour le clignotant, le rouge pour le feu stop ou le feu de position arrière, ou le blanc pour le feu de recul et le feu de position avant. Des plages spécifiques permises pour ces couleurs sont définies dans l'espace international. D'autres critères existent aussi concernant la couleur de la glace du dispositif.

Par ailleurs, on sait que les constructeurs souhaitent se singulariser, notamment avec des éléments visuellement originaux, afin d'être identifiables plus facilement par rapport aux concurrents. Une façon de se singulariser consiste à avoir la glace d'une première couleur et le faisceau émis par le dispositif dans une seconde couleur différente de la première. Ainsi, lorsque le dispositif est allumé, il émet un faisceau dans une couleur correspondant à la fonction du feu, mais lorsqu'il est éteint, la couleur de la glace donne au feu un aspect esthétique différent. Par exemple, on peut chercher à disposer d'un feu ayant une fonction de clignotant en émettant un faisceau issu d'une source de couleur ambrée et ayant une glace de couleur rouge pour des raisons esthétiques. En effet, certains constructeurs souhaitent aujourd'hui avoir les glaces du plus grand nombre de feux possible d'une couleur proche, voire identique, de manière à uniformiser l'ensemble des feux lorsqu'ils sont éteints.

Cependant, l'inconvénient de ces dispositifs est que la couleur de la glace modifie la couleur du faisceau lumineux émis par la source lumineuse. En effet, la glace agit comme un filtre qui laisse passer principalement la lumière dont les longueurs d'onde sont proches de sa couleur. Plus la couleur de la glace est prononcée, plus le filtrage est important.

Un autre problème vient du fait que certaines sources lumineuses, telles les diodes, ne fonctionnent pas de la même façon à toutes les températures. Plus la température de la diode est élevée, plus la couleur du faisceau qu'elle émet dévie vers une couleur plus prononcée. Or dans une utilisation courante, la température de la diode atteint des valeurs de plus de 80°C.

En outre, il existe dans certains pays des normes sur la couleur que doit avoir la glace lorsque le dispositif est éteint. Notamment aux Etats-Unis, les glaces rouges ou ambres doivent être suffisamment prononcée. Pour des raisons de coûts, il est important de fournir un dispositif unique adapté à plusieurs pays, notamment pour les Etats-Unis et l'Europe.

L'invention vise donc, à obtenir un dispositif capable d'émettre un faisceau dans une couleur correspondant à la fonction désirée, avec une glace d'une couleur différente et qui soit suffisamment prononcée pour répondre aux normes édictées dans différents pays.

Pour cela, le dispositif d'éclairage et/ou de signalisation, notamment pour véhicule automobile, comprend un système optique muni d'une source lumineuse configurée pour émettre un faisceau lumineux dans une couleur initiale, ledit dispositif comprenant en outre une glace disposée de manière à être traversée par ledit faisceau, ladite glace étant colorée de manière à transmettre ledit faisceau dans une couleur résultante.

Selon l'invention, ledit dispositif comprend en outre un filtre configuré de sorte à rapprocher la couleur résultante dudit faisceau de sa couleur initiale.

On entend par là que la couleur résultante avec le dispositif de l'invention est plus proche de la couleur initiale avec la couleur résultante qui serait émise par le même dispositif, mais sans filtre.

On dispose ainsi d'un dispositif d'éclairage qui émet un faisceau lumineux dans une couleur lorsque le dispositif est allumé, et présentant une couleur différente lorsqu'il est éteint. Il permet de répondre à tous les critères exigés dans plusieurs pays, autant concernant la couleur du faisceau que celle de la glace. Ainsi, on dispose d'une version unique adaptée, qui en simplifie la fabrication et la logistique pour les constructeurs automobiles.

En rapprochant la couleur résultante de la couleur initiale, le filtre atténue l'effet de la glace sur la couleur du faisceau, et permet de différencier distinctement les deux couleurs.

Ce dispositif apporte en outre la possibilité d'utiliser des diodes électroluminescentes à des températures plus élevées, car le filtre peut aussi servir à atténuer le décalage de la couleur de la diode engendré par la température, vers une couleur plus foncée.

Selon différents modes de réalisation de l'invention, qui pourront être pris ensemble ou séparément :
- ledit filtre est disposé entre ladite source et ladite glace, dans le chemin optique du faisceau,
- la plage de valeur de longueur d'onde de la couleur initiale est centrée autour d'une première valeur de longueur d'onde et la plage de valeur de la couleur résultante est centrée autour d'une deuxième valeur de longueur d'onde,
- ledit filtre est configuré pour réduire l'intensité des longueurs d'onde de la plage de valeur de la couleur initiale du faisceau qui sont les plus proches de la plage de valeur des longueurs d'onde transmises par la glace,
- la première et la deuxième valeur de longueur d'onde correspondent à une couleur ambrée,
- les longueurs d'onde transmises par la glace correspondent au rouge.
- ledit filtre est un filtre interférentiel,
- ledit filtre est un filtre coupe bande définissant au moins une plage de coupure dans la transmission de certaines longueurs d'ondes,
- au moins une des coupures, dite active, est centrée autour d'une valeur de longueur d'onde, ladite valeur étant choisie entre la première valeur de longueur d'onde de la couleur initiale et la valeur de longueur d'onde de la couleur de la glace,
- la couleur initiale s'étend dans une plage de longueur d'onde entre une longueur d'onde inférieure et une longueur d'onde supérieure, la valeur de longueur d'onde sur laquelle ladite coupure active est centrée correspondant à ladite longueur d'onde supérieure ou à ladite longueur d'onde inférieure,
- ledit filtre présente au moins une zone de coupure supplémentaire située en dessous d'une zone de coupure de la glace et/ou au-dessus d'une zone de perception par l'oeil,
- ledit filtre est déposé sur une face de la glace par traitement de surface,
- ledit filtre est déposé sur un insert par traitement de surface, ledit insert étant disposé sur une face de la glace,
- ladite face est orientée vers la source lumineuse,
- ledit filtre est déposé sur le système optique par traitement de surface,
- ledit filtre est déposé sur un écran transparent, ledit écran étant à proximité du système optique.

L'invention sera mieux comprise à la lumière de la description suivante qui n'est donnée qu'à titre indicatif et qui n'a pas pour but de la limiter, accompagnée des dessins joints :
- la figure 1, illustrant de façon schématique, une vue de coupe d'un dispositif d'éclairage et/ou de signalisation selon un premier mode de réalisation de l'invention,
- la figure 2 illustrant de façon schématique, une vue de coupe d'un dispositif d'éclairage et/ou de signalisation selon un deuxième mode de réalisation de l'invention,
- la figure 3 illustrant de façon schématique, une vue de coupe d'un dispositif d'éclairage et/ou de signalisation selon un troisième mode de réalisation de l'invention,
- la figure 4, illustrant de façon schématique, une vue de coupe d'un dispositif d'éclairage et/ou de signalisation selon un quatrième mode de réalisation de l'invention,
- la figure 5 montrant un graphique des longueurs d'ondes transmises à travers un exemple de dispositif selon l'invention.

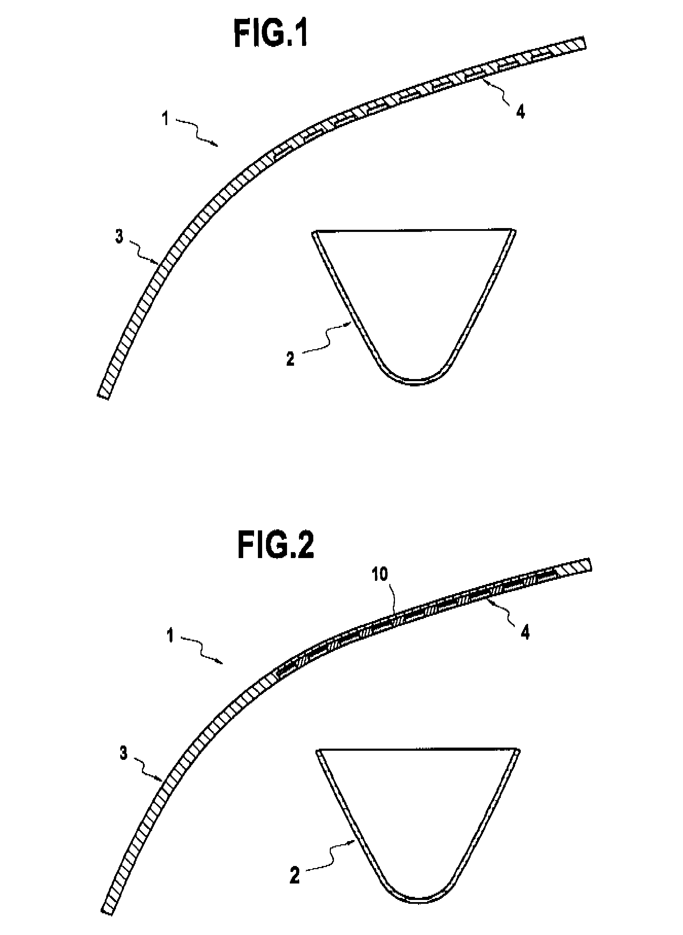

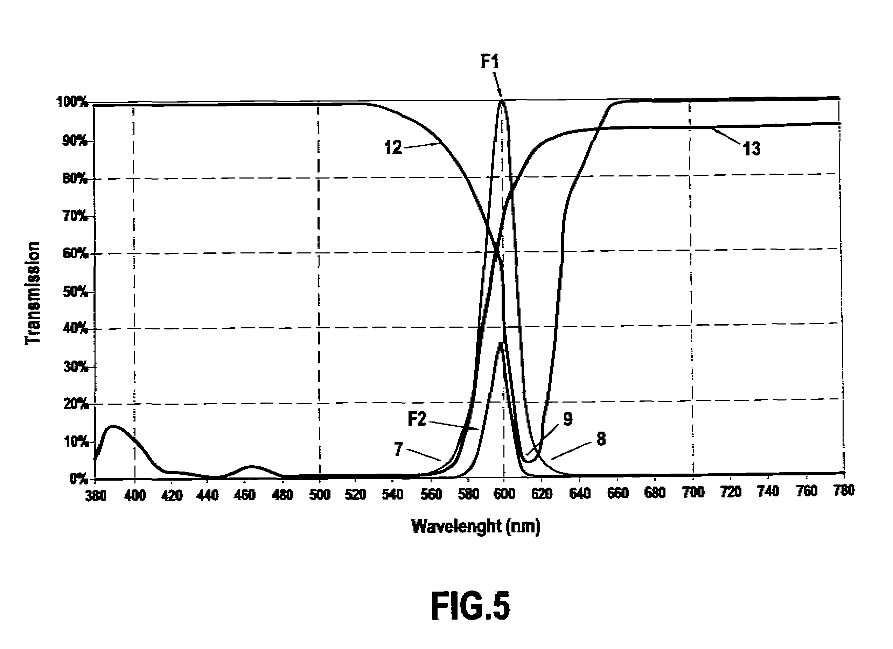

Comme illustré aux figures 1 à 4, l'invention concerne un dispositif d'éclairage et/ou de signalisation 1 notamment pour véhicule automobile, comprenant un système optique 2 muni d'une source lumineuse non représentée, configurée pour émettre un faisceau lumineux dans une couleur initiale F1 (figure 5). La couleur initiale F1 s'étend dans une plage de longueur d'onde entre une longueur d'onde inférieure 7 et une longueur d'onde supérieure 8. Ici, la couleur initiale F1 correspond à la couleur ambre, environ 592nm, pour obtenir une fonction de clignotant.

Sur les figures 1 à 4, ledit dispositif comprend aussi une glace 3 disposée de manière à être traversée par ledit faisceau, ladite glace 3 étant colorée de manière à transmettre ledit faisceau dans une couleur résultante F2 (figure 5). Ici, les longueurs d'ondes transmises par la glace 3 correspondent au rouge, lorsque la glace est éclairée par un illuminant A standard. L'illuminant A est une source lumineuse émettant un faisceau de couleur blanche définie spectralement. Il est couramment utilisé dans le domaine de l'automobile, et permet de mesurer la valeur des longueurs d'ondes transmises par une glace. Ainsi, l'aspect extérieur du feu est rouge lorsque le dispositif est éteint, afin d'avoir plusieurs feux de la même couleur lorsqu'ils ne sont pas allumés.

Ledit dispositif comprend en outre un filtre 4 interférentiel disposé dans le chemin optique du faisceau, entre ladite source et ladite glace 3, pour agir sur le faisceau émis par la source en restant protégé à l'intérieur du dispositif. Le filtre 4 est configuré pour réduire l'intensité des longueurs d'onde de la plage de valeur de la couleur initiale F1 du faisceau qui sont les plus proches de la valeur de la longueur d'onde de la couleur de la glace 3. Il modifie la couleur du faisceau de sorte que la couleur résultante F2 dudit faisceau soit plus proche de sa couleur initiale F1, c'est-à-dire ambrée. Dans l'exemple considéré, le filtre 4 atténue les longueurs d'ondes correspondant aux couleurs proches du rouge et garde les longueurs d'ondes les plus proches du jaune.

Comme illustré à la figure 5, la couleur initiale F1 a une plage de valeur de longueur d'onde, de 560 à 630nm environ, présentant un maximum autour d'une première valeur de longueur d'onde, correspondant à une couleur ambrée d'environ 592nm.

La glace 3 rouge a l'effet d'un filtre passe haut, dont le spectre de transmission 13 est représenté sur le graphique de la figure 5. Elle laisse passer les longueurs d'ondes rouges, supérieures à 620nm, et bloque l'essentiel de celles qui ont des longueurs d'ondes plus petites, inférieures à 560nm, telles que celles des couleurs bleues ou vertes. De plus, elle laisse en partie passer les longueurs d'ondes jaunes, de 560 à 590nm environ, et les longueurs d'ondes ambrées et orange, de 590 à 620nm environ. Ainsi, le faisceau qui traverse la glace 3 ressort avec une couleur plus proche du rouge, que de la couleur initiale F1, lorsqu'il n'y a pas de filtre 4.

Ledit filtre 4 interférentiel est un filtre coupe bande dont le spectre de transmission 12 est représenté sur le graphique de la figure 5. Le filtre 4 définit une plage de coupure dans la transmission de certaines longueurs d'ondes ; ici, entre 540 et 660nm environ. La coupure, dite active, est centrée autour d'une valeur de longueur d'onde 9 choisie entre la première valeur de longueur d'onde de la couleur initiale F1, à savoir pour rappel environ 592nm, et la valeur de longueur d'onde de la couleur de la glace 3, à savoir pour rappel supérieure à 620nm. Ici, la plage de coupure présente un minimum centré sur une valeur d'environ 615 nm, c'est-à-dire environ sur la valeur de longueur d'onde correspondant à ladite longueur d'onde supérieure 8 de la couleur initiale.

Ainsi, le faisceau issu de la source subit d'une part, l'effet du filtre passe-haut de la glace 3, qui laisse mieux passer les longueurs d'onde les plus proches du rouge du faisceau. En revanche, l'effet du filtre coupe-bande du filtre 4 interférentiel est de bloquer la transmission des longueurs d'onde les plus proches du rouge du faisceau. La glace 3 décale la couleur du faisceau vers le rouge et le filtre 4 décale la couleur du faisceau vers le jaune. Ainsi, le filtre 4 interférentiel compense l'effet de la glace 3, afin que la couleur résultante F2 du faisceau soit proche de la couleur initiale F1, ici pour rappel la couleur ambrée.

Sur le graphique de la figure 5, la plage de valeur de la couleur résultante F1 est centrée autour d'une deuxième valeur de longueur d'onde, environ 592nm, proche de la première valeur, et qui correspond également à une couleur ambrée.

Les valeurs de longueur d'onde données ne sont qu'indicative de l'exemple considéré et seront bien sûr adaptées à chaque choix de couleur sans sortir de l'invention.

Ledit filtre 4 pourra aussi présenter une ou des zones de coupure supplémentaire, situées en dessous de la zone de coupure de la glace et une autre zone de coupure située au-dessus de la zone de perception par l'oeil, qui ne sont pas représentées sur la figure 5. La ou les coupures du dessous n'ont pas d'effet sur la couleur résultante F2 puisque la glace produit le même effet dans cette zone de valeurs de longueurs d'ondes. De même, la ou les coupures du dessus n'ont pas d'effet non plus, car elles concernent les longueurs d'ondes qui ne sont pas visibles par l'oeil.

Ce type de filtre 4 est courant et facile à fabriquer, il peut donc aisément être utilisé pour un dispositif 1 conforme à l'invention et permet d'éviter des coûts importants de fabrication.

En outre, le filtre 4 pourra être déposé par traitement de surface sur des parties du dispositif 1. Plusieurs agencements sont possibles pour disposer ledit filtre 4 entre la source et la glace 3 dans le dispositif 1.

Sur la figure 1, selon un premier mode de réalisation, il est déposé sur une face de la glace 3, du côté orienté vers la source. La face étant située du côté interne du dispositif 1, le filtre 4 est protégé des dégradations extérieures.

Dans un second mode de réalisation représenté sur la figure 2, ledit filtre 4 est déposé sur un insert 10 disposé sur une face de la glace 3 orientée vers la source lumineuse. L'utilisation d'un insert 10 est avantageuse car il est plus aisé de faire un traitement de surface par dépôt sur un élément de ce type, compte tenu de sa petite taille.

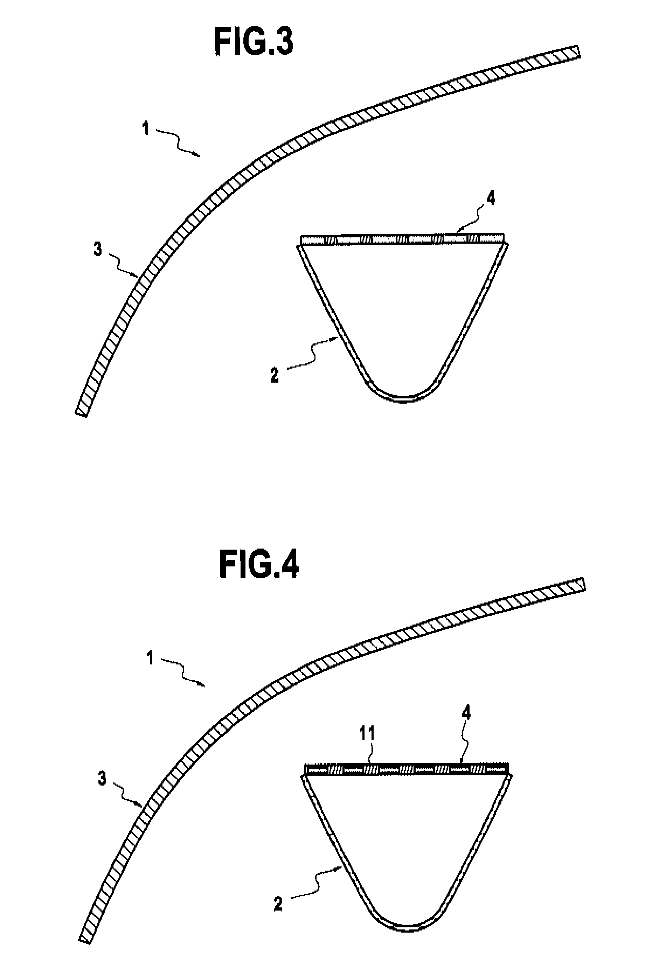

Dans un troisième mode de réalisation, représenté sur la figure 3, ledit filtre 4 est déposé directement sur le système optique 2. Ce mode permet d'éviter l'utilisation d'un élément supplémentaire dans le dispositif 1. Dans ce cas le système optique 2 comprend un collimateur dioptrique destiné à orienter les rayons lumineux issus de la source, sur lequel est déposé le filtre 4.

Dans un mode de réalisation préféré, représenté sur la figure 4, ledit filtre 4 est déposé sur un écran transparent 11, qui est placé à proximité de la source lumineuse ou du système optique 2, notamment en regard et/ou au contact dudit système optique 2. Ce mode offre l'avantage d'avoir une surface de traitement minimale à effectuer, afin d'économiser des coûts de production liés au traitement de surface. En effet, la largeur du faisceau à intercepter est alors réduite par rapport à la largeur du faisceau au niveau de la glace.

## Revendications

1. Dispositif d'éclairage et/ou de signalisation (1), notamment pour véhicule automobile, comprenant un système optique (2) muni d'une source lumineuse (S) configurée pour émettre un faisceau lumineux dans une couleur initiale (F1), ledit dispositif comprenant en outre une glace (3) disposée de manière à être traversée par ledit faisceau, ladite glace (3) étant colorée de manière à transmettre ledit faisceau dans une couleur résultante (F2), **caractérisé en ce que** ledit dispositif (1) comprend en outre un filtre (4) configuré de sorte à rapprocher la couleur résultante (F2) dudit faisceau de sa couleur initiale (F1).

2. Dispositif d'éclairage et/ou de signalisation selon la revendication 1, dans lequel le filtre (4) est disposé entre ladite source (S) et ladite glace (3), dans le prolongement optique du faisceau.

3. Dispositif d'éclairage et/ou de signalisation selon la revendication 1 ou 2, dans lequel la plage de valeur de longueur d'onde de la couleur initiale (F1) est centrée autour d'une première valeur de longueur d'onde et la plage de valeur de la couleur résultante (F2) est centrée autour d'une deuxième valeur de longueur d'onde.

4. Dispositif d'éclairage et/ou de signalisation selon la revendication 3, dans lequel le filtre (4) est configuré pour réduire l'intensité des longueurs d'onde de la plage de valeur de la couleur initiale (F1) du faisceau qui sont les plus proches de la plage de valeur des longueurs d'onde transmises par la glace (3).

5. Dispositif d'éclairage et/ou de signalisation selon la revendication 3 ou 4, dans lequel la première et la deuxième valeur de longueur d'onde correspondent à une couleur ambrée.

6. Dispositif d'éclairage et/ou de signalisation selon l'une quelconque des revendications 4 ou 5, dans lequel les longueurs d'onde transmises par la glace (3) correspondent au rouge.

7. Dispositif d'éclairage et/ou de signalisation selon l'une quelconque des revendications précédentes, dans lequel le filtre (4) est un filtre interférentiel.

8. Dispositif d'éclairage et/ou de signalisation selon l'une quelconque des revendications précédentes, dans lequel le filtre (4) est un filtre coupe bande définissant au moins une plage de coupure dans la transmission de certaines longueurs d'ondes.

9. Dispositif d'éclairage et/ou de signalisation selon l'une quelconque des revendications précédentes, dans lequel au moins une des coupures, dite active, est centrée autour d'une valeur de longueur d'onde (9), ladite valeur étant choisie entre la première valeur de longueur d'onde de la couleur initiale (F1) et la valeur de longueur d'onde de la couleur de la glace (3).

10. Dispositif d'éclairage et/ou de signalisation selon la revendication 9, dans laquelle la couleur initiale (F1) s'étend dans une plage de longueur d'onde entre une longueur d'onde inférieure (7) et une longueur d'onde supérieure (8), la valeur de longueur d'onde (9) sur laquelle ladite coupure active est centrée correspondant à ladite longueur d'onde supérieure (8) ou à ladite longueur d'onde inférieure (7).

11. Dispositif d'éclairage et/ou de signalisation selon la revendication 10, dans laquelle ledit filtre (4) présente au moins une zone de coupure supplémentaire située en dessous d'une zone de coupure de la glace et/ou au-dessus d'une zone de perception par l'oeil.

12. Dispositif d'éclairage et/ou de signalisation selon l'une quelconque des revendications précédentes, dans lequel le filtre (4) est déposé sur une face de la glace (3) par un traitement de surface.

13. Dispositif d'éclairage et/ou de signalisation selon l'une quelconque des revendications 1 à 11, dans lequel le filtre (4) est déposé sur un insert (10) par traitement de surface, ledit insert (10) étant disposé sur une face de la glace (3).

14. Dispositif d'éclairage et/ou de signalisation selon l'une quelconque des revendications 1 à 11, dans lequel le filtre (4) est déposé sur le système optique (2) par traitement de surface.

15. Dispositif d'éclairage et/ou de signalisation selon l'une quelconque des revendications 1 à 11, dans lequel le filtre (4) est déposé sur un écran (11) transparent, ledit écran (11) étant à proximité du système optique (2).
